**Europäisches Patentamt**

**European Patent Office**

**Office européen des brevets**

(19)

(11) Veröffentlichungsnummer: **0 109 461**
**B1**

(12) # EUROPÄISCHE PATENTSCHRIFT

(45) Veröffentlichungstag der Patentschrift:
**18.03.87**

(51) Int. Cl.⁴: **G 21 C 19/06**

(21) Anmeldenummer: **82111788.4**

(22) Anmeldetag: **18.12.82**

(54) **Gestell zum Lagern von nuklearen Brennelementen.**

(30) Priorität: **17.11.82 CH 6692/82**

(43) Veröffentlichungstag der Anmeldung:
**30.05.84 Patentblatt 84/22**

(45) Bekanntmachung des Hinweises auf die Patenterteilung:
**18.03.87 Patentblatt 87/12**

(84) Benannte Vertragsstaaten:
**DE FR IT SE**

(56) Entgegenhaltungen:
**CH-A-622 903**
**DE-A-2 629 938**
**FR-A-2 433 816**
**US-A-4 119 859**
**US-A-4 331 244**
**US-A-4 342 620**

(73) Patentinhaber: **GEBRÜDER SULZER AKTIENGESELLSCHAFT, Zürcherstrasse 9, CH-8401 Winterthur (CH)**

(72) Erfinder: **Bosshard, Ernst, Grundstrasse 20, CH-8405 Winterthur (CH)**

(74) Vertreter: **Dipl.- Ing. H. Marsch Dipl.- Ing. K. Sparing Dipl.- Phys.Dr. W.H. Röhl Patentanwälte, Rethelstrasse 123, D-4000 Düsseldorf (DE)**

EP 0 109 461 B1

## Beschreibung

Die Erfindung betrifft ein Gestell zum Lagern von nuklearen Brennelementen nach dem Oberbegriff des Anspruchs 1.

Es ist ein solches Gestell aus der FR-A 2 433 816 bekannt. Bei ihm sind die zur seitlichen Abstützung der Vierkantrohre dienenden Anschlußstücke in die Wand dieser Rohre eingeschweisst und so ausgebildet, dass - im Horizontalschnitt gesehen - das Anschlußstück des einen Vierkantrohres einen zur Rohrwand rechtwinkligen Steg mit einem daran anschliessenden, zum Nachbarrohr offenen C-Profil bildet und das Anschlußstück des anderen Vierkantrohres ebenfalls einen zur Rohrwand rechtwinkligen Steg aufweist, der aber an seinem, dem erstgenannten Vierkantrohr zugewendeten Ende mit einem Bolzen versehen ist. Der Bolzendurchmesser ist etwas kleiner als der lichte Durchmesser des C-Profils. Bei zusammengefügtem Gestell befindet sich also jeweils der Bolzen in einem benachbarten C-Profil, wobei zwischen beiden ein beträchtliches Spiel existiert und auch Spiel zwischen dem Steg des Bolzens und den Enden des C-Profils vorhanden ist. Diese Konstruktion hat den Nachteil, dass an jeder so gebildeten Abstützstelle höchstens zwei Vierkantrohre zusammengeschlossen werden können. Wegen des Spiels zwischen den Anschlußstücken können die Vierkantrohre sich bei Auftreten von Erdbeben in horizontaler Richtung gegeneinander stossartig bewegen, was zu unzulässigen Verformungen oder sogar Beschädigungen dieser Rohre führen kann. Ausserdem ist die Konstruktion nicht bei solchen Vierkantrohren anwendbar, deren Wände aus zwei ineinander angeordneten Hüllen mit dazwischen gelegten Platten aus neutronenabsorbierendem Material bestehen.

Es ist Aufgabe der Erfindung, ein Gestell der eingangs genannten Art so zu verbessern, dass bei Erdbeben die einzelnen Vierkantrohre sich nicht gegeneinander bewegen können und an jeder Abstützstelle auch vier Vierkantrohre zusammengefasst werden können.

Diese Aufgabe wird erfindungsgemäss durch die im Kennzeichen des Anspruchs 1 angegebenen Merkmale gelöst. Durch das Anschweissen der Anschlußstücke an den Kanten der Vierkantrohre und durch das Berühren der Anschlußstücke zusammen mit den Anziehmitteln ergibt sich eine völlig spielfreie Verbindung von zwei bis vier Vierkantrohren, die auch bei Auftreten von Erdbeben keine gegenseitige Bewegung der Vierkantrohre zulässt. Darüberhinaus ist die neue Verbindung für Vierkantrohre anwendbar, die in die Wände eingelegte Platten aus neutronenabsorbierendem Material aufweisen. Bei diesen Rohren bleibt der Kantenbereich frei von solchen Platten, so dass diese beim Anschweissen der Anschlußstücke nicht zu hoch erhitzt werden.

Durch das Anordnen der Verbindungen in mehreren Höhenbereichen gemäss Anspruch 2 wird eine besonders starre Verbindung erzielt, die die Erdbebensicherheit des Gestells weiter verbessert.

Bei der Ausführungsform des Gestells nach Anspruch 3 kommt man mit besonders einfachen Konstruktionselementen aus.

Anspruch 4 betrifft eine Lösung, die den Vorteil aufweist, dass beim Montieren der Anziehmittel vier einander benachbarte Vierkantrohre ohne Ausrichtoperationen an einer gemeinsamen vertikalen Achse zentriert werden, und dass gleichzeitig eine höhenfeste Verbindung resultiert.

Durch die Ausbildung der Anschlußstücke als Vierkantstäbe entsprechend Anspruch 5 entsteht eine besonders starre Verbindung, die auch ein Drehen einzelner Anschlußstücke um die gemeinsame Achse verunmöglicht.

Anspruch 6 schliesslich führt zu einer Senkung des Materialaufwands, insbesondere, wenn die Anschlußstücke in einem Pressvorgang gefertigt werden.

Die Erfindung wird nun an drei in der Zeichnung dargestellten Ausführungsbeispielen näher erläutert. Es zeigen:

Fig. 1: einen Horizontalschnitt durch die Ecken von vier benachbarten Vierkantrohren auf der Höhe einer Verbindungsschraube von erfindungsgemässen Anschlußstücken,

Fig. 2: einen Horizontalschnitt entsprechend Fig. 1 eines zweiten Ausführungsbeispiels,

Fig. 3: einen Vertikalschnitt längs der Ebene III-III in Fig. 2,

Fig. 4: eine dritte Ausführungsvariante der Erfindung im Horizontalschnitt durch vier Anschlußstücke.

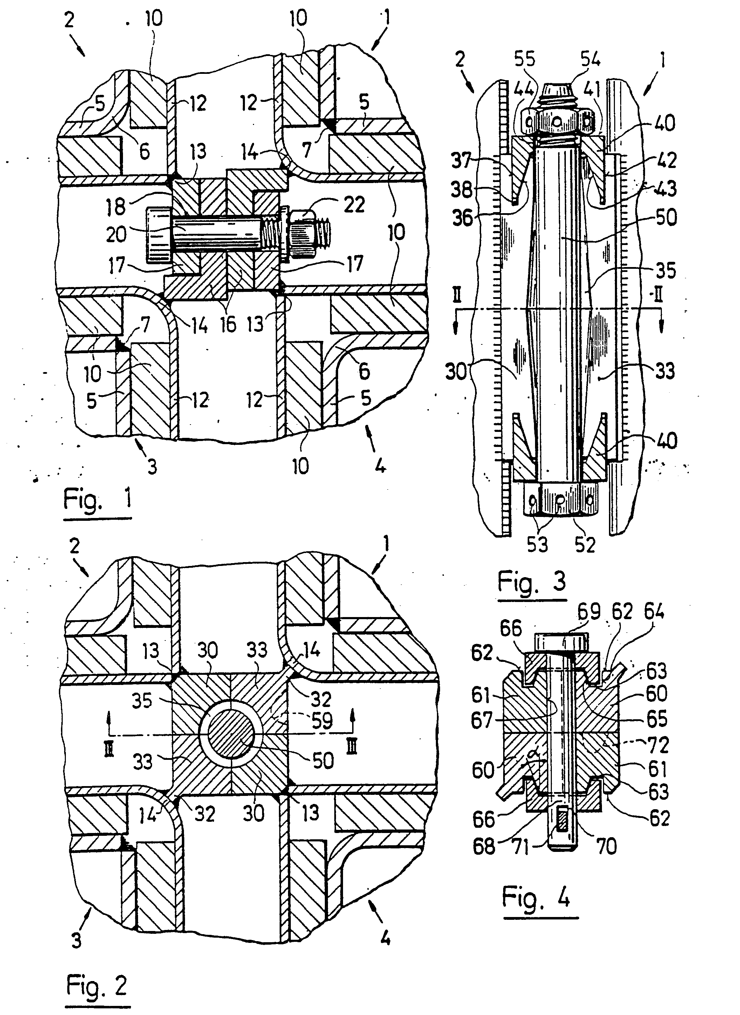

In Fig. 1 sind die Ecken von vier Vierkantrohren 1 bis 4 dargestellt. Jedes dieser vier Vierkantrohre enthält ein Innenrohr 5, das aus zwei Winkelblechen zusammengeschweisst ist. Zwei der vier Kanten des Innenrohrs 5 sind als Biegung 6 und die beiden andern Kanten als Schweissung 7 ausgeführt. Auf den vier Seiten jedes der Vierkantrohre 1 bis 4 sind neutronenabsorbierende Platten 10, beispielsweise aus einem gesinterten Bor-Aluminium-Blech, angebracht und das Ganze ist sodann von einem Vierkanthüllrohr 12 umgeben.

Auch dieses Vierkanthüllrohr 12 ist aus jeweils zwei Winkelblechen längs zweier Kanten zusammengeschweisst, sodass die Kanten am Umfang als Schweisskante 13, Biegung 14, Schweisskante 13 und Biegung 14 abwechseln.

An den Biegungen 14 ist jeweils ein L-Profilstab 16 mit einer Ecke eines kürzeren Schenkels angeschweisst, und an den Schweisskanten 13 ist, ebenfalls durch Schweissung, je ein Flacheisen-Profilstab 17 angebracht. Die Profilstäbe 16 und 17 sind, vertikal zur Zeichenebene von Figur 1, etwa 20cm lang und an den vier Vierkantrohren 1 bis 4 auf gleicher Höhe angeordnet. Sie sind an drei Stellen horizontal durchbohrt und durch die Bohrungen 18 verlaufen je eine Kopfschraube 20, zu der eine Mutter 22 gehört.

Die Profilstäbe 16 und 17 sind mit engen Toleranzen gefertigt und mit exakten Lehren so genau an den Schweisskanten 13 beziehungsweise an den Biegungen 14 angeschweisst, dass die Vierkantrohre von oben her auf die nicht gezeichnete Bodenplatte abgesenkt werden können, ohne dass sich die Profilstäbe 16 und 17 ineinander verhaken. Um dies sicher zu vermeiden, sind die einander zugewendeten Endpartien der Profilstäbe 16, 17 leicht angeschrägt.

Nach dem Einfahren der Vierkantrohre werden durch zwei der Bohrungen 18 konischangeschliffene Passdorne eingesteckt und sodann im dritten Loch, mit passenden Manipulierwerkzeugen, von der Seite her, die Paßschraube 20 und die zugehörige Mutter 22 zugeführt und miteinander verschraubt. Hernach werden nacheinander der eine und der andere Passdorn ausgebaut und jeweils durch eine Paßschraube 20 mit Mutter 22 ersetzt.

Diese Lösung ist sehr einfach, sicher und preisgünstig. Die Profilstäbe lassen sich in grossen Längen durch eine Ziehoperation und anschliessendes Abschneiden fertigen. Das Bohren der Löcher 18 geschieht in Bohrlehren.

In Fig. 2 stehen sich wiederum vier Vierkantrohre 1 bis 4 gegenüber. Sie sind gleich ausgeführt und mit den gleichen Ziffern bezeichnet wie in Fig. 1. An den Schweisskanten 13 sind gebrochene Kanten zweier Vierkantstäbe 30 und an den Biegungen 14 zwei niedere Längsrippen 32 von zwei Vierkantstäben 33 angeschweisst. Die vier Vierkantstäbe 30 und 33 umfassen, als vereinigtes Gebilde, einen doppelkonischen Innenraum 35 und an den beiden Stirnseiten sind sie mit je einer Ausdrehung versehen, die eine innere Konusfläche 36, eine äussere Zylinderfläche 37 und an ihrer tiefsten Stelle eine Einstechung 38 aufweist. In die beiden beschriebenen Ausdrehungen greift je ein Ringstück 40 ein, das im wesentlichen eine Planfläche 41, eine äussere Zylinderfläche 42, eine innere Konusfläche 43 und eine Bohrung 44 aufweist.

Die beiden Ringstücke 40 werden durch eine Dehnschraube 50 in vertikaler Richtung zusammengespannt. Am Schraubenkopf 52 weist die Dehnschraube 50 in den Schlüsselflächen Eindrücke 53 auf, in welche federnd gelagerte Kugeln einer nicht gezeichneten Sechskantnuss eingreifen können. Eine solche Nuss ist am unteren Ende, aufwärts gerichtet, neben einem Montagestab befestigt.

Auch auf der zur Dehnschraube 50 gehörenden Mutter 55 sind an den Schlüsselflächen solche Eindrücke 53 vorgesehen. Zu dieser Mutter 55 gehört ein weiterer Montagestab, an dessen unterem Ende über ein Kreuzgelenk eine passende Sechskantnuss mit mindestens einer radial federnden Kugel angebracht ist.

An beispielsweise vier Meter hohen Vierkantrohren 1 bis 4 sind jeweils etwa 1, 2, 3 und 4 Meter oberhalb der Unterkante der Vierkantrohre Verbindungselemente nach den Figuren 2 und 3 angebracht. Bei der Montage der Vierkantrohre werden diese, wie zum Beispiel aus der CH-A 631 673 bekannt, über nach innen gerichtete Flansche an der Bodenplatte angeschraubt, worauf durch die nicht gezeichnete, aber zuerst beschriebene Montagestange eine nach oben gerichtete Schraube 50, über die ein Ringstück 40 gestülpt ist, von seitlich-unten her in den Raum 35 eingeführt wird. Anschliessend wird von oben her ein Ringstück 40 aufgesetzt und die Mutter 55 mittels einer gegebenenfalls schräg eingeführten zweiten Montagestange auf den Zapfen 54 der Schraube 50 aufgesetzt, hinuntergedreht, und angezogen. Durch diese Manipulation werden die Ringstücke 40 gegeneinander gepresst, wobei die vier Vierkantstäbe 30 und 33 gegeneinandergezogen werden.

Die auf dem Schraubenkopf 52 und der Mutter 55 sitzenden Nüsse können nun leicht abgestreift und, mit den Montagestangen, entfernt werden. Da die Gewinde an der Schraube 50, die vorzugsweise als Dehnschraube ausgebildet ist, sehr flachgängig verlaufen, kann im allgemeinen auf zusätzliche Verdrehsicherungen der Mutter 55 beziehungsweise der Schraube 50 verzichtet werden.

Die Vierkantstäbe 30 und 33 sind, wie schon erwähnt, längs ihrer gemeinsamen Kante doppelkonisch ausgenommen. Dies dient einerseits einer Verringerung des Materialbedarfs und anderseits wird dadurch der Verzug beim Anschweissen der Vierkantstäbe verringert.

Die Vierkantstäbe werden zweckmässig in einem Pressvorgang geformt. Zur weiteren Gewichtseinsparung können die Vierkantstäbe seitliche Längsnuten aufweisen, wie eine solche zum Beispiel durch die gestrichelte Linie 59 in Fig. 2 angedeutet ist.

Da die Anschlußstücke jeweils in einem Kantenbereich der Vierkantrohre angeordnet sind, wo keine Platten 10 vorhanden sind, besteht keine Gefahr, dass beim Anschweissen solche Platten zu hohe Temperaturen annehmen.

Selbstverständlich können die Anschlußstücke statt über Konusflächen auch über Flächen mit Anzug gegeneinander gepresst werden, wobei diese Stäbe in beliebiger Richtung angeordnet werden können.

Eine solche Lösung ist beispielsweise in Fig 4 gezeigt. Dort weisen vier etwa quadratische Profilstäbe 60 beziehungsweise 61 in je einer Seitenfläche 62 eine Längsnut 63 auf, deren eine Flanke 64, senkrecht und deren andere Flanke 65 leicht schräg zur Seitenfläche 62 steht.

In jeweils zwei benachbarte Nuten 63 greifen die Schenkel eines U-Profilstabs 66 ein, die innen leichten Anzug aufweisen, wobei der Anzugwinkel $\alpha$ mit der Schräge der Flanke 65 übereinstimmt.

Die Vierkantstabe 60, 61 und die U-Profilstabe 66 sind in zusammengebauter Form gemeinsam mit zwei übereinander angeordneten Querbohrungen 67 versehen, durch die ein Bolzen 68 mit Kopf 69 gesteckt ist. Der Bolzen 68 weist an seinem freien Ende ein Langloch 70 auf, durch das ein flacher Keil 71 gesteckt ist.

Die Vierkantstäbe 60, 61 verlaufen, analog zu Fig. 2, parallel zu den Kanten der in Fig. 4 nicht gezeichneten Vierkantrohre.

Selbstverständlich können auch die Vierkantstäbe 60, 61 mit weiteren, gewichtsparenden Nuten versehen sein, die beispielsweise nach der gestrichelt gezeichneten Linie 72 profiliert sein können.

Die Lösung nach Fig. 4 hat den Vorteil, dass die Fertigung der Einrichtung hauptsächlich durch Ziehen erfolgen kann.

Das erfindungsgemässe Gestell erlaubt, im Falle eines Verklemmens eines Brennelementes in einem Vierkantrohr die benachbarten Vierkantrohre leicht nach oben auszubauen, worauf das havarierte Vierkantrohr am Fuss mit einer Trennscheibe abgeschnitten werden kann. Das betroffene Brennelement lässt sich samt Vierkantrohr-Fragment nach oben entfernen und hierauf kann der auf der Bodenplatte verbliebene Flansch mit dem restlichen Vierkantrohrstuck ausgebaut werden. Auch der Einbau eines neuen Vierkantrohrs erfolgt problemlos.

Beim Konzept nach den Fig. 2 und 3 kann es vorteilhaft sein, statt der Dehnschraube 50, nach Art einer Schraubzwinge, einen neben den Ventilstäben angeordneten Bügel mit einer Druckschraube vorzusehen, wobei einerseits ein Arm des Bügels und anderseits die Druckschraube auf die Ringstücke 40 wirken.

**Patentansprüche**

1. Gestell zum Lagern von nuklearen Brennelementen, mit einem Bündel paralleler, etwa vertikaler, neutronenabsorbierender Vierkantrohre, die auf einer Bodenplatte befestigt sind, wobei an den Vierkantrohren auf mindestens einem Höhenbereich Anschlußstücke angeschweisst sind, über die sich die Vierkantrohre bei zusammengefügtem Gestell gegenseitig abstützen, dadurch gekennzeichnet, dass die Anschlußstücke im Bereich der Kanten der Vierkantrohre angeschweisst und so ausgebildet sind, dass sie sich bei zusammengefügtem Gestell in mindestens einer Mittelebene zwischen jeweils benachbarten Vierkantrohren seitlich berühren, und dass Anziehmittel vorgesehen sind, durch die die Anschlußstücke seitlich gegeneinander gezogen werden.

2. Gestell nach Anspruch 1, dadurch gekennzeichnet die Anschlußstücke in mehreren, für die verschiedenen Vierkantrohre jedoch unter sich gleichen Höhenbereichen angeordnet sind.

3. Gestell nach einem der Ansprüche 1 und 2, dadurch gekennzeichnet, dass als Anziehmittel mindestens eine in einer Horizontalebene verlaufende Schraube vorgesehen ist.

4. Gestell nach einem der Ansprüche 1 und 2, dadurch gekennzeichnet, dass als Anziehmittel eine Kopfschraube mit vertikaler Achse samt Schraubenmutter vorgesehen ist, die über zwei Konusflächen mit ebenfalls vertikaler Achse auf die Anschlußstücke einwirkt.

5. Gestell nach Anspruch 4, dadurch gekennzeichnet, dass die Anschlußstücke als längs einer Kante ausgehöhlte Vierkantstäbe ausgebildet sind, an deren Enden die Konusflächen als 90°-Kegelstumpfsektoren vorgesehen sind.

6. Gestell nach Anspruch 5, dadurch gekennzeichnet, dass die Konusflächen durch stirnseitige Eindrehungen an den Vierkantstäben erzeugt sind.

**Claims**

1. A storage frame for nuclear fuel elements, the frame comprising a bunch of parallel substantially vertical neutron-absorbing square-section tubes which are secured to a baseplate, connecting elements being welded to the tubes at at least one level, the tubes bearing on one another by way of such elements with the frame assembled, characterised in that the connecting elements are so welded and so devised near the edges of the square tubes as to contact one another laterally with the frame assembled in at least one centre-plane between adjacent square tubes; and tightening means are provided to draw the connecting members laterally towards one another.

2. A frame according to claim 1, characterised in that the connecting elements are disposed at a number of heights which are identical for the various square tubes.

3. A frame according to claim 1 and/or 2, characterised in that the tightening means take the form of at least one screw which extends in a horizontal plane.

4. A frame according to claim 1 and/or 2, characterised in that the tightening means take the form of a vertical-axis headed screw and a nut which acts by way of two conical surfaces, also of vertical axis, on the connecting elements.

5. A frame according to claim 4, characterised in that the connecting elements are square bars which are hollowed along one edge and at whose ends the conical surfaces are present in the form of right-angled frustum sectors.

6. A frame according to claim 5, characterised in that the conical surfaces are in the form of turnings in the end faces of the square bars.

**Revendications**

1. Châssis pour stocker des éléments combustibles nucléaires, comportant un faisceau de tubes carrés parallèles sensiblement verticaux absorbant les neutrons, fixés sur une plaque de fond, des pièces de raccordement étant soudées aux tubes carrés sur au moins une zone de la hauteur, pièces par l'intermédiaire desquelles les tubes carrés se soutiennent mutuellement lorsque le châssis est assemblé, caractérisé par le fait que les pièces de raccordement sont rapportées par soudage dans la région des arêtes des tubes carrés et sont réalisées de telle sorte que, une fois le châssis assemblé, elles soient latéralement en contact dans au moins un plan médian entre deux tubes carrés respectivement voisins; et par le fait que sont prévus des moyens de serrage par l'intermédiaire desquels les pièces de raccordement sont serrées latéralement les unes contre les autres.

2. Châssis selon la revendication 1, caractérisé par le fait que les pièces de raccordement sont disposées dans plusieurs zones de la hauteur, qui sont toutefois mutuellement identiques pour les différents tubes carrés.

3. Châssis selon l'une des revendications 1 et 2, caractérisé par le fait qu'au moins un boulon s'étendant dans un plan horizontal est prévu en tant que moyen de serrage.

4. Châssis selon l'une des revendications 1 et 2, caractérisé par le fait qu'il est prévu, en tant que moyen de serrage, un boulon à tête à axe vertical associé à un écrou qui, par l'intermédiaire de deux surfaces tronconiques également à axe vertical, agit sur les pièces de raccordement.

5. Châssis selon la revendication 4, caractérisé par le fait que les pièces de raccordement sont réalisées sous la forme de tiges carrées dépouillées le long d'une arête, aux extrémités desquelles les surfaces tronconiques sont prévues en tant que secteurs tronconiques de 90°.

6. Châssis selon la revendication 5, caractérisé par le fait que les surfaces tronconiques sont produites par décolletage des faces extrêmes des tiges carrées.

Fig. 1

Fig. 2

Fig. 3

Fig. 4